# EUROPÄISCHE PATENTSCHRIFT

(11) **EP 0 962 670 B1**
(45) Veröffentlichungstag und Bekanntmachung des Hinweises auf die Patenterteilung: **14.07.2004**
(21) Anmeldenummer: 99108112.6
(22) Anmeldetag: 24.04.1999
(51) Int. Cl.: F16C 17/10

(54) **Gebaute Bundlagerschale**
Axial/radial composite bearing
Palier composé axial-radial

(30) Priorität: 05.06.1998 DE 19825116
(43) Veröffentlichungstag der Anmeldung: 08.12.1999
(73) Patentinhaber: KS Gleitlager GmbH, 68789 St. Leon-Rot (DE)
(72) Erfinder: Bickle, Wolfgang, 68799 Reilingen (DE); Schubert, Werner, 69168 Wiesloch (DE)
(74) Vertreter: Dreiss, Fuhlendorf, Steimle & Becker

(56) Entgegenhaltungen:
- EP-A- 0 444 754
- DE-A- 4 015 256
- GB-A- 2 225 392
- US-A- 4 533 261

## Beschreibung

Die Erfindung betrifft eine gebaute Bundlagerschale mit einem halbschalenförmigen Radiallagerteil und einem im Bereich der axialen Stirnseite des Radiallagerteils einseitig befestigbaren teilringscheibenförmigen Axiallagerteil oder mit beidseits befestigbaren teilringscheibenförmigen Axiallagerteilen, wobei jedes Axiallagerteil in radialer Richtung nach innen vorspringende Haltezungen aufweist, die mit Halteausnehmungen im Bereich der axialen Stirnseite des Radiallagerteils in Eingriff bringbar sind, wobei wenigstens eine der Halteausnehmungen in axialer Richtung randoffen ausgebildet ist.

Eine derartige gebaute Bundlagerschale ist aus der DE 40 15 256 A1 bekannt. Bei einem in dieser Druckschrift beschriebenen Ausführungsbeispiel werden die Haltezungen des Axiallagerteils in die Halteausnehmungen des Radiallagerteils eingeführt, und danach werden in die axiale Stirnseite des Radiallagerteils beidseits der Halteausnehmung Kerben eingebracht. Durch diese axiale Krafteinwirkung auf das Radiallagerteil wird eine verdrängende Verformung in Umfangsrichtung derart erreicht, dass die betreffende Haltezunge quasi umbördelt wird und in axialer Richtung nicht mehr aus der Halteausnehmung gelöst werden kann. Diese Art der Fixierung ist jedoch extrem aufwendig. Die verdrängende Verformung erfordert zur Ausübung und Aufnahme der hierfür benötigten Kräfte einen komplizierten Werkzeugaufbau. Die verdrängende Verformung kann nicht auf den Bereich der Halteausnehmungen und auf die Umfangsrichtung begrenzt werden, sondern er geht stets mit einer ungewollten Verformung des Radiallagerteils einher und hat sich in der Praxis nicht bewährt.

Mit dieser Druckschrift wurde auch vorgeschlagen, axiale Sicherungsnasen aus der Umfangsfläche des Radiallagerteils heraus und gegen das Axiallagerteil zu stemmen. Auch dabei muss eine ungewollte Verformung des Radiallagerteils hingenommen werden.

Eine entsprechende Ausbildung einer gebauten Bundlagerschale ist aus DE 24 12 870 B2 bekannt.

Aus der DE 39 41 343 A1 ist ein besonders aufwendiges gebautes Bundlager bekannt, bei dem axial vorstehende Randabschnitte des Radiallagerteils um mehr als 90° nach außen gebogen werden, um mit jeweiligen Lippen der Haltezungen des Axiallagerteils eine Hintergriffverbindung zu bilden. Der hierfür erforderliche Materialbedarf zur Herstellung der axial vorstehenden Halteabschnitte und der Bearbeitungsaufwand ist sehr groß. Es besteht außerdem die Gefahr, dass die Halteabschnitte beim Umbiegen nach außen um mehr als 90° abbrechen.

Der vorliegenden Erfindung liegt die Aufgabe zugrunde, eine gebaute Bundlagerschale der eingangs beschriebenen Art so zu verbessern, dass beim Fügen von Radiallagerteil und Axiallagerteil eine ungewollte Verformung des Radiallagerteils verhindert wird und die Maßhaltigkeit der beiden Teile nicht beeinträchtigt wird. Die schlussendliche Montage der Bundlagerschale, d.h. das Zusammenfügen und unlösbare verbinden von Radiallagerteil und Axiallagerteil soll auf kostengünstige Art und Weise durchführbar sein.

Diese Aufgabe wird bei einer gebauten Bundlagerschale der erwähnten Art erfindungsgemäß dadurch gelöst, dass am Radiallagerteil wenigstens ein die in axialer Richtung randoffene Halteausnehmung begrenzender Steg oder Randteil geformt ist, der nach dem Aneinanderfügen von Radiallagerteil und Axiallagerteil derart gegen die Haltezunge umbiegbar ist, dass beide Teile unlösbar miteinander verbunden sind.

Es soll also nach der Erfindung keine verdrängende Verformung, durch Kerbwirkung oder dergleichen, des Radiallagerteils vorgenommen werden, sondern es soll ein die Halteausnehmung unmittelbar begrenzender Steg lediglich gegen die jeweilige Haltezunge umgebogen werden, um zu verhindern, dass die Haltezunge in axialer und/oder radialer Richtung aus der Halteausnehmung gelöst werden kann.

Der umbiegbare Steg- oder Randteil kann sich nach einer Ausführungsform der Erfindung in Umfangsrichtung des Radiallagerteils erstrecken und eine teilweise axiale Begrenzung der Halteausnehmung bilden. Solchenfalls ist die Halteausnehmung nicht über ihre gesamte Umfangslänge in axialer Richtung offen, so dass die zugehörige Haltezunge des Axiallagerteils bevorzugt in radialer Richtung in die Halteausnehmung eingeführt wird. Hiernach wird der Steg oder Randteil gegen die Haltezunge gebogen.

Nach einer weiteren bevorzugten Ausführungsform der Erfindung ist der Steg- oder Randteil in axialer Richtung des Radiallagerteils erstreckt und bildet vor dem Umbiegen eine seitliche Begrenzung der Halteausnehmung in Umfangsrichtung des Radiallagerteils. Solchenfalls lässt sich die betreffende Haltezunge des Axiallagerteils auch in axialer Richtung des Radiallagerteils in die betreffende Halteausnehmung einführen. Danach werden die freien Enden des in axialer Richtung erstreckten Steg- oder Randteils im wesentlichen in Umfangsrichtung des Radiallagerteils gebogen und übergreifen die Haltezunge.

In Weiterbildung der vorstehenden Ausführungsform erweist es sich als vorteilhaft, wenn der Steg- oder Randteil einerseits durch Stanzen der Halteausnehmung und andererseits durch Stanzen einer axialen zungenförmigen Ausnehmung gebildet ist. Der hierfür erforderliche Bearbeitungsaufwand ist minimal, und durch entsprechende Dimensionierung der Dicke des umbiegbaren Steg- oder Randteils lässt sich der Biegewiderstand den Anforderungen entsprechend vorgeben.

Beim Stanzen der Halteausnehmung kann in dem Steg- oder Randteil eine der Haltelasche des Axiallagerteils zugewandte Formaussparung gebildet werden, die eine Sollbiegestelle bildet und beim Umbiegen des Steg- oder Randteils eine Kante der Haltelasche umgreift.

Nach einem weiteren Erfindungsgedanken kann die Halteausnehmung einen axialen Hinterschnitt aufweisen, der von der Haltezunge des Axiallagerteils in axialer Richtung hintergreifbar ist. Nach dem Umbiegen des Steg- oder Randteils kann die Haltelasche nicht mehr aus der betreffenden Halteausnehmung entnommen werden.

In Weiterbildung dieses Erfindungsgedankens ist die Halteausnehmung in Umfangsrichtung des Radiallagerteils geringfügig größer bemessen als die Haltezunge, so dass diese in axialer Richtung in die Halteausnehmung eingeführt und in die Hintergriffsstellung verdreht werden kann. In entsprechender Weise können sämtliche Halteausnehmungen und -zungen ausgebildet werden. Solchenfalls wir das Axiallagerteil in axialer Richtung an das Radiallagerteil gefügt, wobei die Haltezungen in die randoffenen Halteausnehmungen eingeführt werden und schließlich durch geringfügige Verdrehung in die Hintergriffstellung gebracht werden, in welcher sie dann durch Umbiegen des Steg- oder Randteils gesichert werden.

Weitere Merkmale, Einzelheiten und Vorteile der Erfindung ergeben sich aus der zeichnerischen Darstellung und nachfolgenden Beschreibung dreier vorteilhafter Ausführungsformen der erfindungsgemäßen gebauten Bundlagerschale. In der Zeichnung zeigt:
- Figur 1: eine Stirnansicht einer ersten Ausführungsform einer erfindungsgemäßen Bundlagerschale;
- Figur 2: eine Draufsicht auf die Bundlagerschale nach Figur 1;
- Figur 3: eine Schnittansicht der Bundlagerschale nach Figur 1 gesehen in Richtung der Pfeile III-III in Figur 1;
- Figur 4: ein Detail "X" aus Figur 2;
- Figur 5: ein Detail "Y" aus Figur 1;
- Figur 6: ein Detail "Z" aus Figur 3;
- Figuren 7 bis 12: den Figuren 1 bis 6 entsprechende Darstellungen einer zweiten Ausführungsform des erfindungsgemäßen Bundlagers; und
- Figuren 13 bis 18: den Figuren 1 bis 6 entsprechende Darstellungen einer dritten Ausführungsform des erfindungsgemäßen Bundlagers.

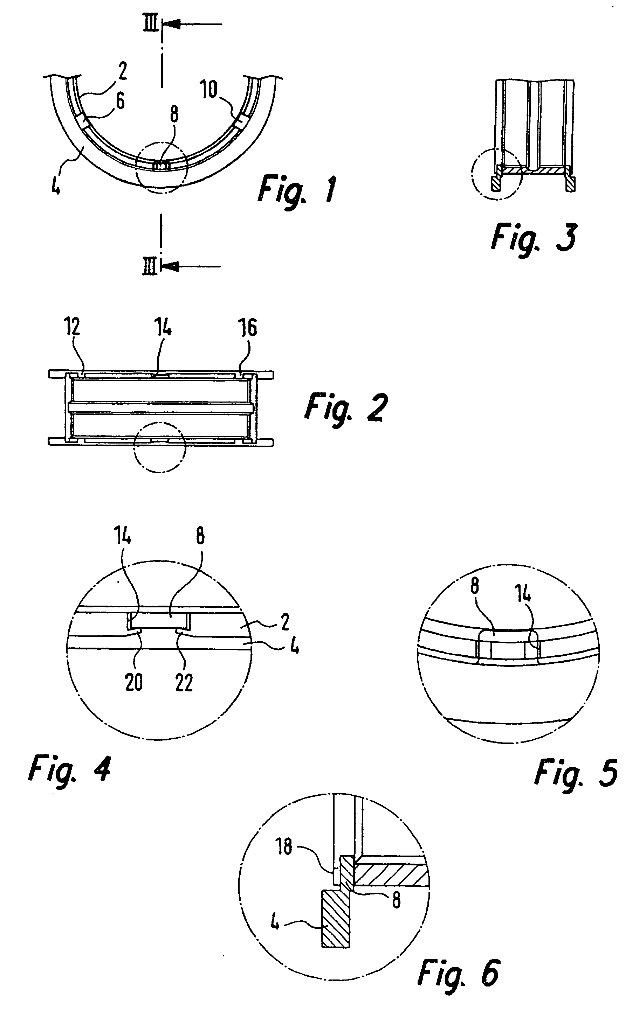

Die Figuren 1 bis 3 zeigen verschiedene Ansichten einer ersten Ausführungsform einer gebauten Bundlagerschale bestehend aus Radiallagerteil 2 und Axiallagerteil 4. Die Figuren 4 bis 6 zeigen Details der Figuren 1 bis 3. Am Axiallagerteil 4 sind radial nach innen vorstehende Haltezungen 6, 8 und 10 vorgesehen, die durch Stanzen und Prägen in ansich bekannter Weise gebildet sind. Die Haltezungen 6, 8, 10 greifen in Halteausnehmungen 12, 14, 16 im Bereich der axialen Stirnseite 18 des Radiallagerteils 2 ein.

Die Halteausnehmung 14 im Scheitel des Radiallagerteils 2 ist randoffen ausgebildet, wie aus Figur 4 ersichtlich ist. Zu beiden Seiten der Ausnehmung 14 wird diese durch einen randseitigen Steg 20 und 22 in axialer Richtung teilweise begrenzt. Diese Stege 20, 22 sind verhältnismäßig schwach ausgebildet und lassen sich nach dem Einführen der Haltezunge 8 gegen diese verbiegen.

Die Halteausnehmungen 12, 16 sind ebenfalls randoffen und in Umfangsrichtung derart ausgebildet, dass sich die Haltezungen 6, 10 durch Verkippen des Axiallagerteils 4 in ihre bestimmungsgemäße Position in die Halteausnehmungen 12, 16 bringen lassen.

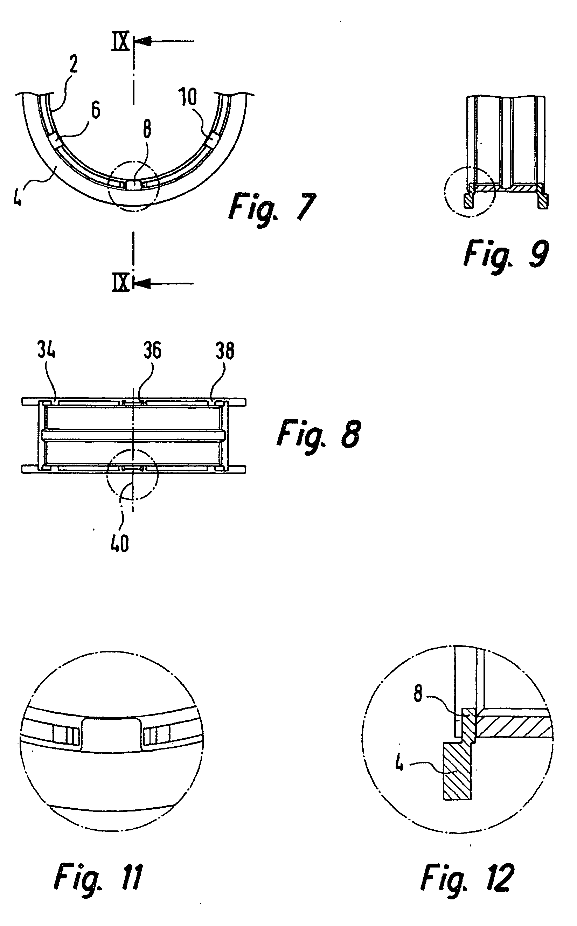

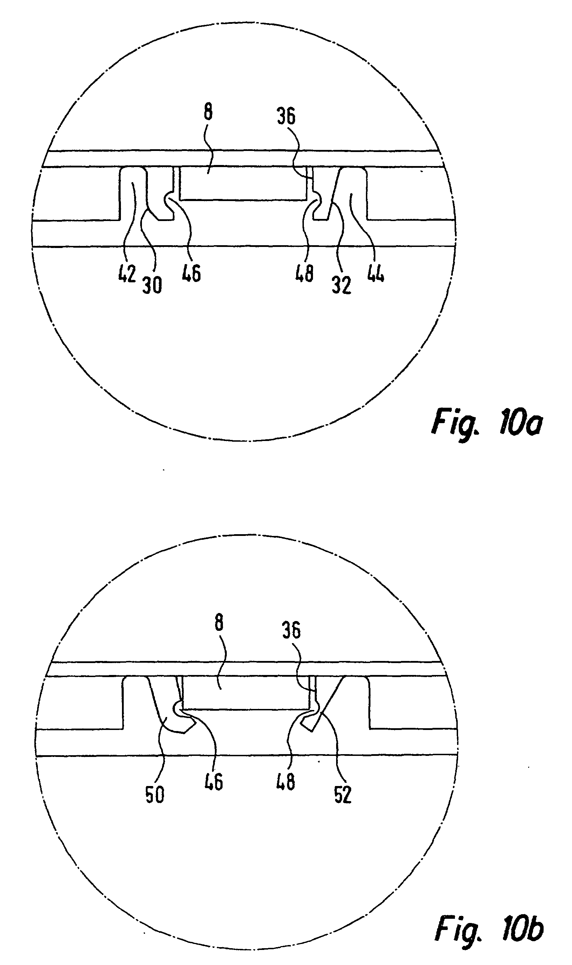

Aus den Figuren 7 bis 12 ist eine weitere Ausführungsform der erfindungsgemäßen Bundlagerschale ersichtlich, wobei die Figuren 10a und 10b die Bundlagerschale vor bzw. nach dem erfindungsgemäßen Umbiegen der die Halteausnehmungen begrenzenden Stege 30, 32 zeigt. Bei dieser Ausführungsform können sämtliche Halteausnehmungen 34, 36, 38 in gleicher Weise ausgebildet sein. Der Axiallagerteil 4 lässt sich in axialer Richtung an das Radiallagerteil 2 anfügen, wobei die Haltezungen 6, 8, 10 in die über die gesamte Umfangslänge offen zugänglichen Halteausnehmungen 34, 36, 38 eingesetzt werden. Im Anschluss hieran werden die freien Enden der Stege 30, 32 in Richtung auf die Haltezunge 8 umgebogen. Hierdurch wird das Axiallagerteil 4 unlösbar mit dem Radiallagerteil 2 verbunden.

Die in axialer Richtung 40 erstreckten Stege 30, 32 sind dadurch gebildet, dass einerseits die jeweilige Halteausnehmung 34, 36, 38 und andererseits je eine zungenförmige Ausnehmung 42 bzw. 44 in den axialen Stirnbereich des Radiallagerteils 2 gestanzt wird. Beim Stanzen der jeweiligen Halteausnehmung 34, 36, 38 wurde an der Innenseite des jeweiligen Stegs 30, 32 eine Formaussparung 46 bzw. 48 ausgebildet. Durch die Schwächung des jeweiligen Stegs 30, 32 durch die Formaussparung 46 bzw. 48 wird eine Sollbiegestelle 50, 52 definiert.

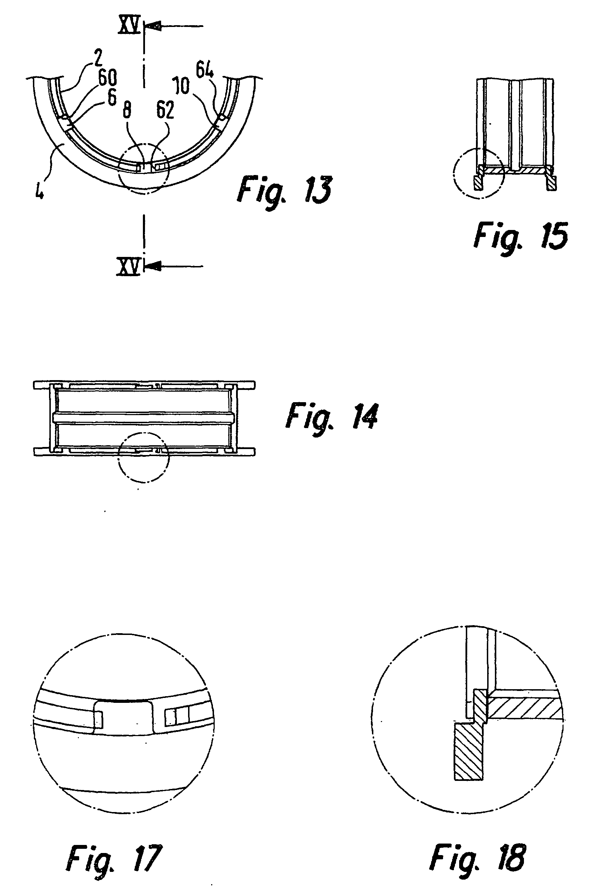

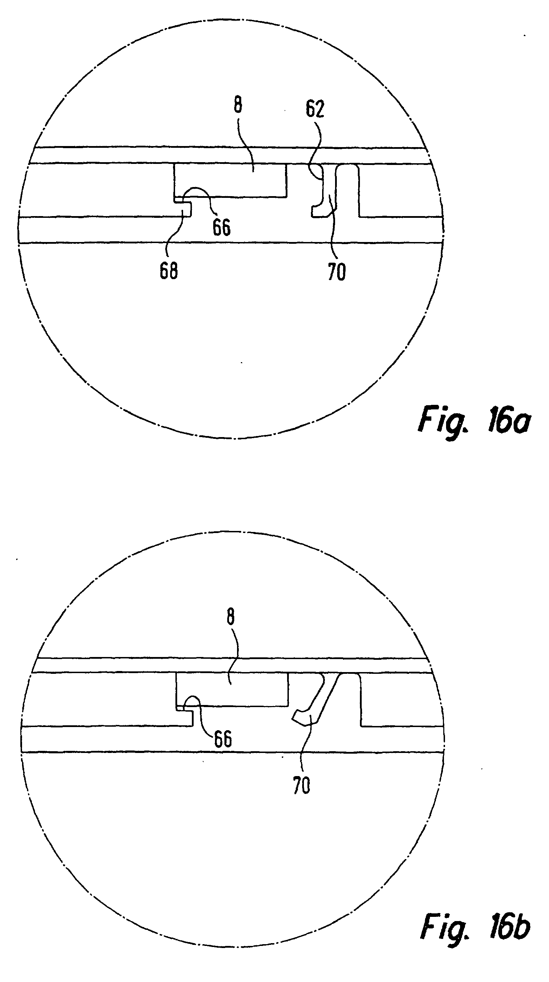

Die Figuren 13 bis 18 zeigen eine dritte Ausführungsform der erfindungsgemäßen Bundlagerschale, bei der drei in axialer Richtung randoffene Halteausnehmungen 60, 62, 64 im Radiallagerteil 2 vorgesehen sind. Die Länge der Halteausnehmungen 60, 62, 64 in Umfangsrichtung des Radiallagerteils 2 ist etwas größer als die entsprechende Länge der Haltezungen 6, 8, 10. Die Halteausnehmungen 60, 62, 64 sind so ausgebildet, dass sie einen axialen Hinterschnitt 66 aufweisen, der von einer jeweiligen Haltezunge 6, 8, 10 hintergreifbar ist. Beim Zusammenfügen von Radiallagerteil 2 und Axiallagerteil 4 werden die jeweiligen Haltezungen 6, 8, 10 in axialer Richtung in die jeweilige randoffene Halteausnehmung 60, 62, 64 eingesetzt und dann in die in Figur 16a dargestellte Position geringfügig verdreht, in der die Haltelaschen 6, 8, 10 den jeweiligen Hinterschnitt 66, der von einem axialen stirnseitigen Randabschnitt 68 des Radiallagerteils 2 gebildet ist, hintergreifen. Im Anschluss hieran wird ein Steg 70, der wie beim zweiten Ausführungsbeispiel gebildet ist, in Richtung auf die jeweilige Haltezunge 6, 8, 10 umgebogen, so wie dies in Figur 16b dargestellt ist.

Radiallagerteil 2 und Axiallagerteil 4 sind dann formschlüssig und unlösbar miteinander verbunden.

## Patentansprüche

1. Gebaute Bundlagerschale mit einem halbschalenförmigen Radiallagerteil (2) und einem im Bereich der axialen Stirnseite des Radiallagerteils (2) einseitig befestigbaren teilringscheibenförmigen Axiallagerteil (4) oder mit beidseits befestigbaren teilringscheibenförmigen Axiallagerteilen (4), wobei jedes Axiallagerteil in radialer Richtung nach innen vorspringende Haltezungen (6, 8, 10) aufweist, die mit Halteausnehmungen (12, 14, 16; 34, 36, 38; 60, 62, 64) im Bereich der axialen Stirnseite des Radiallagerteils (2) in Eingriff bringbar sind, wobei wenigstens eine der Halteausnehmungen (14; 34, 36, 38; 60, 62, 64) in axialer Richtung randoffen ausgebildet ist, **dadurch gekennzeichnet, dass** am Radiallagerteil (2) wenigstens ein die in axialer Richtung randoffene Halteausnehmung (14; 34, 36, 38; 60, 62, 64) begrenzender Steg oder Randteil (20, 22; 30, 32; 70) geformt ist, der nach dem Aneinanderfügen von Radiallagerteil (2) und Axiallagerteil (4) derart gegen die Haltezunge umbiegbar ist, dass beide Teile unlösbar miteinander verbunden sind.

2. Gebaute Bundlagerschale nach Anspruch 1, **dadurch gekennzeichnet, dass** der Steg oder Randteil (20, 22) in Umfangsrichtung des Radiallagerteils (2) erstreckt ist und eine teilweise axiale Begrenzung der Halteausnehmung (14) bildet.

3. Gebaute Bundlagerschale nach Anspruch 1, **dadurch gekennzeichnet, dass** der Steg oder Randteil (30, 32; 70) in axialer Richtung des Radiallagerteils (2) erstreckt ist und vor dem Umbiegen eine seitliche Begrenzung der Halteausnehmung (34, 36, 38; 60, 62, 64) in Umfangsrichtung des Radiallagerteils (2) bildet.

4. Gebaute Bundlagerschale nach Anspruch 3, **dadurch gekennzeichnet, dass** der Steg oder Randtteil (30, 32; 70) einerseits durch Stanzen der Halteausnehmung (34, 36, 38; 60, 62, 64) und andererseits durch Stanzen einer axialen zungenförmigen Ausnehmung (42, 44) gebildet ist.

5. Gebaute Bundlagerschale nach Anspruch 4, **dadurch gekennzeichnet, dass** der Steg oder Randteil (34, 36) eine der Haltezunge (6, 8, 10) des Axiallagerteils (2) zugewandte Formaussparung (46, 48) aufweist, die eine Sollbiegestelle (50, 52) bildet und beim Umbiegen des Stegs oder Randteils (34, 36) eine Kante der Haltezunge (6, 8, 10) umgreift.

6. Gebaute Bundlagerschale nach einem oder mehreren der vorstehenden Ansprüche, **dadurch gekennzeichnet, dass** die Halteausnehmung (60, 62, 64) einen axialen Hinterschnitt (66) aufweist, der von der Haltezunge (6, 8, 10) hintergreifbar ist und dass nach dem Umbiegen des Stegs oder Randteils (70) die Haltezunge (6, 8, 10) nicht mehr von dem Hinterschnitt (66) freikommt.

7. Gebaute Bundlagerschale nach Anspruch 6, **dadurch gekennzeichnet, dass** die Halteausnehmung (60, 62, 64) in Umfangsrichtung des Radiallagerteils (2) geringfügig größer bemessen ist als die Haltezunge (6, 8, 10), so dass diese in axialer Richtung in die Halteausnehmung (60, 62, 64) eingeführt und in die Hintergriffsstellung verdreht werden kann.

## Claims

1. Assembled collar end bearing shell having a half-shell-shaped radial bearing part (2) and a graduated-ring-shaped thrust bearing part (4) fastenable at one side in the region of the axial end face of the radial bearing part (2) or having graduated-ring-shaped thrust bearing parts (4) fastenable at both sides, wherein each thrust bearing part has fixing tongues (6, 8, 10), which project in a radially inward direction and are bringable into engagement with fixing recesses (12, 14, 16; 34, 36, 38; 60, 62, 64) in the region of the axial end face of the radial bearing part (2), wherein at least one of the fixing recesses (14; 34, 36, 38; 60, 62, 64) is of an axially open-edged design, **characterised in that** there is formed on the radial bearing part (2) at least one web or edge part (20, 22; 30, 32; 70), which delimits the axially open-edged fixing recess (14; 34, 36, 38; 60, 62, 64) and which, after the radial bearing part (2) and thrust bearing part (4) have been joined together, is bendable in such a way towards the fixing tongue that both parts are permanently connected to one another.

2. Assembled collar end bearing shell according to claim 1, **characterized in that** the web or edge part (20, 22) extends in the peripheral direction of the radial bearing part (2) and forms a partial axial boundary of the fixing recess (14).

3. Assembled collar end bearing shell according to claim 1, **characterized in that** the web or edge part (30, 32; 70) extends in the axial direction of the radial bearing part (2) and, prior to bending round, forms a lateral boundary of the fixing recess (34, 36, 38; 60, 62, 64) in peripheral direction of the radial bearing part (2).

4. Assembled collar end bearing shell according to claim 3, **characterized in that** the web or edge part (30, 32; 70) is formed, on the one hand, by punching the fixing recess (34, 36, 38; 60, 62, 64) and, on the other hand, by punching an axial tongue-shaped recess (42, 44).

5. Assembled collar end bearing shell according to claim 4, **characterized in that** the web or edge part (34, 36) has a shaped cut-out (46, 48), which faces the fixing tongue (6, 8, 10) of the thrust bearing part (2) and forms a predetermined bending point (50, 52) and on bending-round of the web or edge part (34, 36) embraces an edge of the fixing tongue (6, 8, 10).

6. Assembled collar end bearing shell according to one or more of the preceding claims, **characterized in that** the fixing recess (60, 62, 64) has an axial undercut (66), behind which the fixing tongue (6, 8, 10) is engageable and that after bending round of the web or edge part (70) the fixing tongue (6, 8, 10) no longer comes free of the undercut (66).

7. Assembled collar end bearing shell according to claim 6, **characterized in that** the fixing recess (60, 62, 64) in the peripheral direction of the radial bearing part (2) is of a slightly greater dimension than the fixing tongue (6, 8, 10) so that the fixing tongue may be introduced in the axial direction into the fixing recess (60, 62, 64) and rotated into the rear engagement position.

## Revendications

1. Palier composé axial-radial avec un élément de palier radial (2) en forme de demi-coquille et un élément de palier axial (4) en forme de secteur de rondelle, apte à être fixé d'un côté dans la région de la face frontale axiale de l'élément de palier radial (2), ou avec des éléments de palier axiaux (4) en forme de secteurs de rondelle, aptes à être fixés des deux côtés, chaque élément de palier axial présentant des languettes de retenue (6, 8, 10) qui dépassent vers l'intérieur dans la direction radiale et peuvent être mises en prise avec des évidements de retenue (12, 14, 16 ; 34, 36, 38 ; 60, 62, 64) ménagés au niveau de la face frontale axiale de l'élément de palier radial (2), au moins un des évidements de retenue (14 ; 34, 36, 38 ; 60, 62, 64) étant ouvert sur un bord dans la direction axiale, **caractérisé en ce qu'**il est formé sur l'élément de palier radial (2) au moins une barrette ou un élément marginal (20, 22 ; 30, 32 ; 70) qui délimite l'évidement de retenue (14 ; 34, 36, 38 ; 60, 62, 64) ouvert sur un bord dans la direction axiale et qui, après assemblage de l'élément de palier radial (2) et de l'élément de palier axial (4) peut être cintré(e) contre la languette de retenue de façon que les deux éléments soient reliés entre eux de manière inamovible.

2. Palier composé axial-radial selon la revendication 1, **caractérisé en ce que** la barrette ou l'élément marginal (20, 22) s'étend dans la direction circonférentielle de l'élément de palier radial (2) et forme une délimitation axiale partielle de l'évidement (14).

3. Palier composé axial-radial selon la revendication 1, **caractérisé en ce que** la barrette ou l'élément marginal (30, 32 ; 70) s'étend dans la direction axiale de l'élément de palier radial (2) et forme avant cintrage une délimitation latérale de l'évidement de retenue (34, 36, 38 ; 60, 62, 64) dans la direction circonférentielle de l'élément de palier radial (2).

4. Palier composé axial-radial selon la revendication 3, **caractérisé en ce que** la barrette ou l'élément marginal (30, 32 ; 70) est formé(e), d'une part, par découpage de l'évidement de retenue (34, 36, 38, ; 60, 62, 64) et, d'autre part, par découpage d'un évidement axial (42, 44) en forme de languette.

5. Palier composé axial-radial selon la revendication 4, **caractérisé en ce que** la barrette ou l'élément marginal (34, 36) présente, en regard de la languette de retenue (6, 8, 10) de l'élément de palier axial (2), une encoche profilée (46, 48) formant point de cintrage (50, 52) et s'engageant autour d'une arête de la languette de retenue (6, 8, 10) lors du cintrage de la barrette ou de l'élément marginal (34, 36).

6. Palier composé axial-radial selon l'une au moins des revendications précédentes, **caractérisé en ce que** l'évidement de retenue (60, 62, 64) présente une contre-dépouille axiale (66) derrière laquelle peut venir s'engager la languette de retenue (6, 8, 10) et **en ce qu'**après cintrage de la barrette ou de l'élément marginal (70) la languette de retenue (6, 8, 10) ne peut plus se dégager de la contre-dépouille (66).

7. Palier composé axial-radial selon la revendication 6, **caractérisé en ce que** l'évidement de retenue (60, 62, 64) est dimensionné légèrement plus généreusement dans la direction circonférentielle de l'élément de palier radial (2) que la languette de retenue (6, 8, 10), de sorte que cette dernière peut être introduite axialement dans l'évidement de retenue (60, 62, 64) et amenée par rotation jusqu'en position de blocage.
